# EUROPÄISCHE PATENTSCHRIFT

(11) **EP 0 864 737 B1**
(45) Veröffentlichungstag und Bekanntmachung des Hinweises auf die Patenterteilung: **17.01.2001**
(21) Anmeldenummer: 98103089.3
(22) Anmeldetag: 21.02.1998
(51) Int. Cl.: F02B 37/013, F02B 37/18, F02D 9/06

(54) **Steuervorrichtung für eine aufgeladene Brennkraftmaschine**
Control device for a pressure-charged internal combustion engine
Dispositif de commande pour un moteur à combustion interne suralimenté

(30) Priorität: 11.03.1997 DE 19709879
(43) Veröffentlichungstag der Anmeldung: 16.09.1998
(73) Patentinhaber: MAN NUTZFAHRZEUGE AG, 80995 München (DE)
(72) Erfinder: Möller, Heribert, Dipl.-Ing. (FH), 91623 Sachsen (DE); Pister, Manfred, Dipl.-Ing. (FH), 90403 Nürnberg (DE)

(56) Entgegenhaltungen:
- DE-A- 2 544 471
- GB-A- 1 092 113
- US-A- 4 224 794
- US-A- 4 526 004
- PATENT ABSTRACTS OF JAPAN vol. 008, no. 191 (M-322), 4.September 1984 & JP 59 082526 A (HINO JIDOSHA KOGYO KK), 12.Mai 1984,

## Beschreibung

Die Erfindung bezieht sich auf eine aufgeladene Brennkraftmaschine gemäß dem Gattungsbegriff.

Aus DE 25 44 471 A1 ist eine aufgeladene Brennkraftmaschine bekannt, bei der zwei Abgasturbolader in Reihe geschaltet sind. Beim Hochfahren der Brennkraftmaschine durchläuft das von einem Abgaskrümmer kommende Abgas zunächst die erste Abgasturbine des ersten Abgasturboladers. Anschließend durchströmt das Abgas die zweite Abgasturbine des zweiten Abgasturboladers. Bei zunehmender Drehzahl der Brennkraftmaschine kann das Abgas regelbar mittels einer Steuervorrichtung an der ersten Abgasturbine vorbei über einen Bypass direkt in die zweite Abgasturbine geleitet werden. Die Steuervorrichtung weist zu diesem Zweck drei Anschlüsse auf, wobei ein erster Anschluß die Verbindung mit dem Abgaskrümmer herstellt. Ein zweiter Anschluß verbindet die Steuervorrichtung mit dem Eingang der ersten Abgasturbine und ein dritter Anschluß verbindet Steuervorrichtung und Bypassleitung. Der Ausgang der ersten Abgasturbine ist stets über einen Kanal mit dem Eingang der zweiten Abgasturbine in Verbindung.

Ausgehend von einer Vorrichtung gemäß dem Gattungsbegriff liegt der Erfindung die Aufgabe zugrunde die Steuervorrichtung so zu gestalten, daß sie zusammen mit den Abgasturboladern eine Einheit von möglichst geringem Bauvolumen bildet und die Funktion einer Drosselklappe für die Motorbremse in die Steuervorrichtung integriert ist.

Gelöst wird diese Aufgabe durch die kennzeichnenden Merkmale des Patentanspruches 1.

Durch den erfindungsgemäßen Drehschieber wird die Steuervorrichtung zusammen mit den beiden Abgasturboladern zu einer organischen Einheit von relativ geringem Bauvolumen zusammengefaßt. Durch die kompakte Bauweise werden Strömungs- und Enthalpieverluste minimiert. Durch Drehung des Kükens aus der Ausgangsstellung wird die erste Abgasturbine umfahren und nur noch die zweite Abgasturbine für den stationären Betrieb durchströmt. Eine weitere Drehung des Kükens versperrt den Weg des Abgaskrümmers und wirkt somit als Drosselung im Motorbremsbetrieb, eine separate Drosselklappe entfällt.

Ein Ausführungsbeispiel einer erfindungsgemäßen Steuervorrichtung ist an Hand von Zeichnungen dargestellt. Es zeigt:
- Fig. 1: eine Brennkraftmaschine mit Schaltkreis des Aufladesystems
- Fig. 2: eine Ansicht des Aufladesystems mit Schnitt durch die Steuervorrichung
- Fig. 3: einen Längsschnitt III-III durch das Küken des Steuersystems
- Fig. 4: Drehschieber mit Kanal zur Verbindung der Abgasturbinen
- Fig. 5: eine detaillierte Darstellung einer radial wirkenden Dichtleiste
- Fig. 6: endseitige Kolbenringe im Küken zur axialen Abdichtung
- Fig. 7 bis 10: verschiedene Schaltstellungen des Kükens

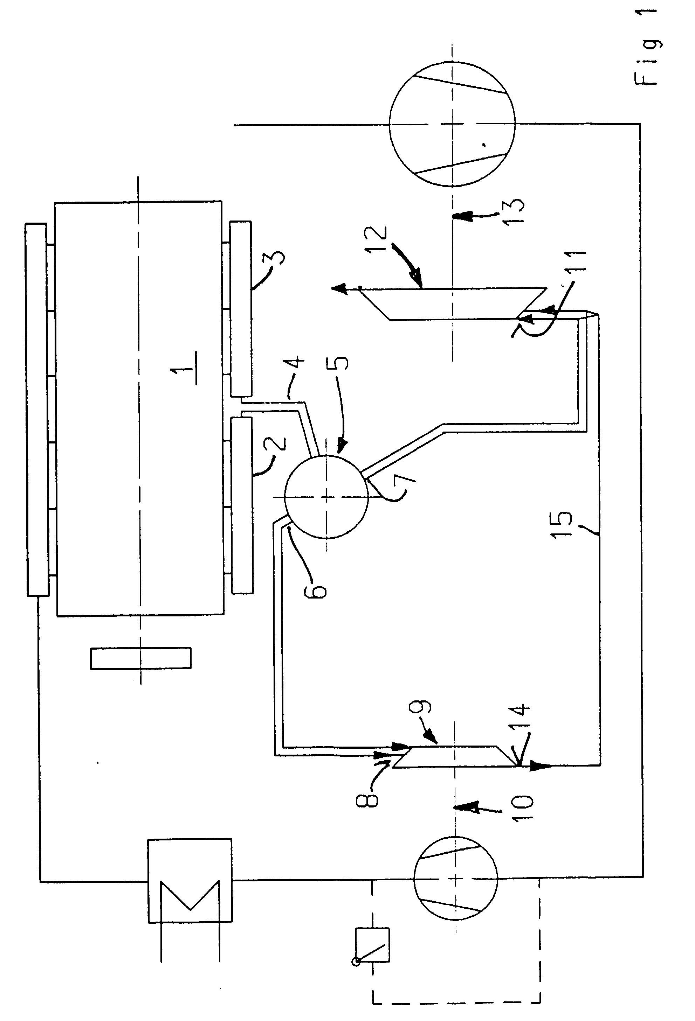

Fig. 1 zeigt eine Brennkraftmaschine 1 mit den getrennten Abgassträngen 2 und 3, welche mittels eines doppelflutigen Abgasstutzens 4 mit einer Steuervorrichtung 5 verbunden sind. Die Steuervorrichtung 5 weist zudem einen ersten und zweiten Anschluß 6, 7 auf, wobei der erste Anschluß 6 zweiflutig mit einem Eingang 8 einer ersten Abgasturbine 9 des ersten Abgasturboladers 10 verbunden ist. Der zweite Anschluß 7 ist wiederum zweiflutig mit einem Eingang 11 einer zweiten Abgasturbine 12 des zweiten Abgasturboladers 13 verbunden. Der Ausgang 14 der ersten Abgasturbine 9 ist direkt mittels eines Kanals 15 mit dem Eingang 11 der zweiten Abgasturbine 12 verbunden.

In einer Ausgangsstellung der Steuervorrichtung 5 wird beim Hochfahren der Brennkraftmaschine 1 der Abgasstutzen 4 über den ersten Anschluß 6 mit dem Eingang 8 der ersten Abgasturbine 9 verbunden. Über Kanal 15 strömt das Abgas anschließend durch die zweite Abgasturbine 12.

Durch Umsteuerung der Steuervorrichtung 5 kann der Abgasstutzen 4 mit dem Eingang 11 der zweiten Abgasturbine 12 verbunden werden. Das Abgas umgeht die erste Abgasturbine 9 und strömt direkt durch die zweite Abgasturbine 12. Die Umsteuerung kann regelbar durchgeführt werden, so daß die erste Abgasturbine noch partiell beaufschlagt wird und in der Drehzahl nicht abrupt abfällt, bevor die zweite Abgasturbine 12 hochfährt.

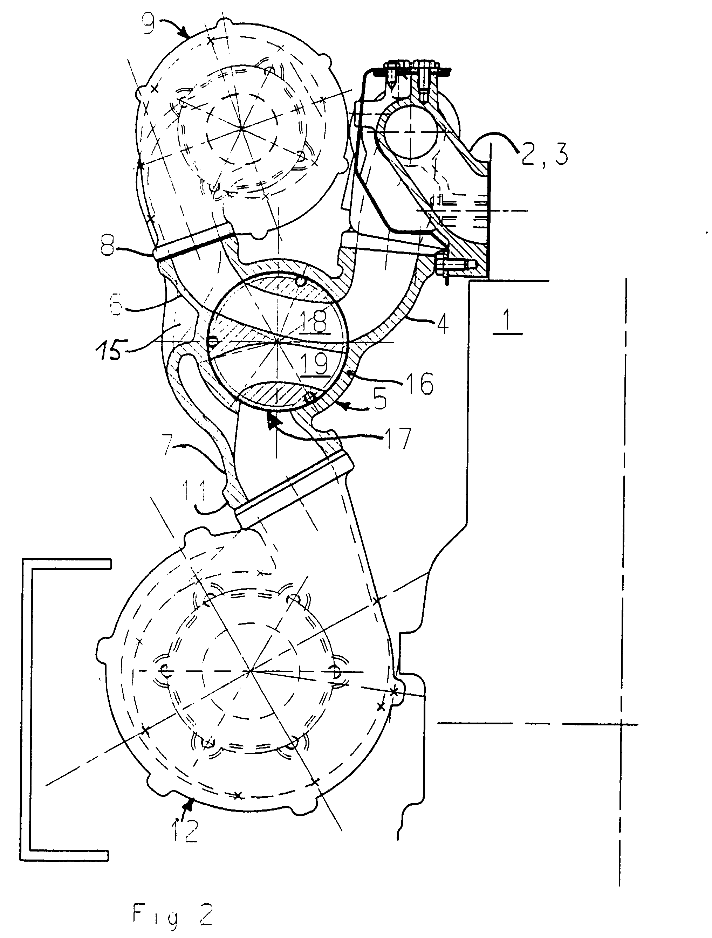

Die erfindungsgemäße Ausführung der Steuervorrichtung 5 als Drehschieber ist aus Fig. 2 zu ersehen. Die Steuervorrichtung 5 besteht aus einem Gehäuse 16 mit angegossenem zweiflutigen Abgasstutzen 4, welcher an die Abgasstränge 2, 3 der Brennkraftmaschine 1 (Fig. 1) angeschlossen ist. Das Gehäuse 16 weist ferner einen ersten und zweiten Anschluß 6, 7 auf welche jeweils ebenfalls zweiflutig ausgeführt sind. Der erste Anschluß 6 mündet in den Eingang 8 der ersten Abgasturbine 9, der zweite Anschluß 7 ist mit dem Eingang 11 der zweiten Abgasturbine 12 verbunden.

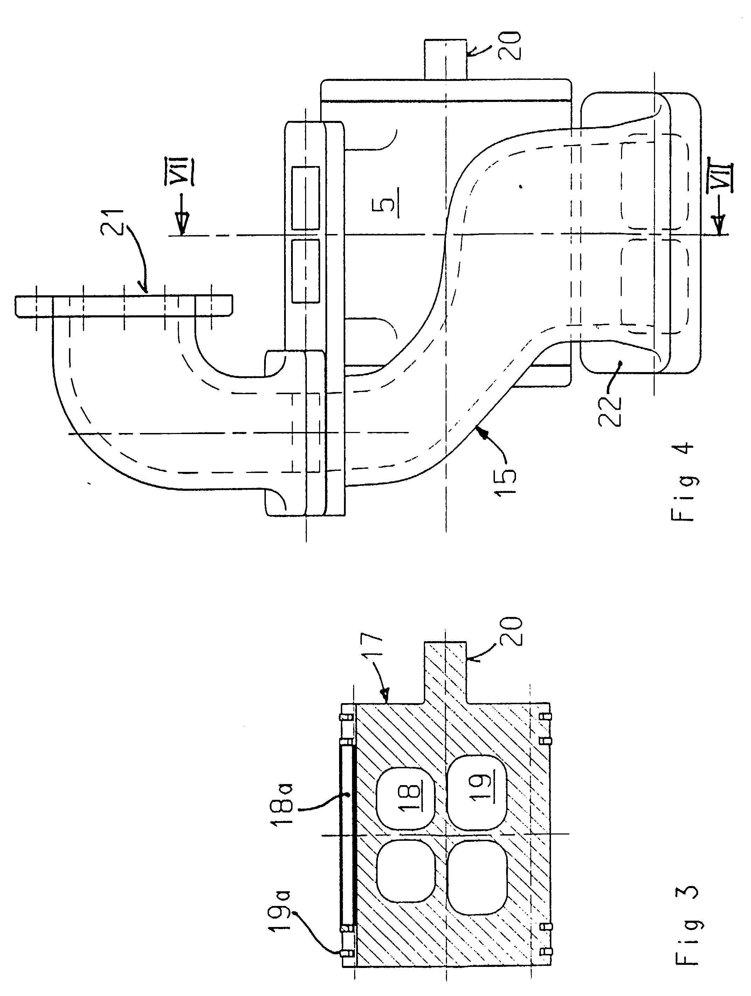

Der Ausgang der ersten Abgasturbine ist über einen in Fig. 4 deutlich dargestellten Kanal 15 direkt mit dem Eingang 11 der zweiten Abgasturbine 12 verbunden. Im Gehäuse 16 ist ein Küken 17 drehbar gelagert, welches zwei Pfade 18, 19 aufweist. Diese beiden Pfade 18, 19 gestatten die wahlweise Verbindung von Abgasstutzen 4 mit dem ersten Anschluß 6,bzw. die Verbindung vom Abgasstutzen 4 mit dem zweiten Anschluß 7. Eine weitere Stellung des Kükens 17 versperrt bei Motorbremsung den Abgasstutzen 4. Das Küken 17 ist drehbar im Gehäuse 16 gelagert und weist zum Ausgleich von thermisch bedingten Verformungen ein radiales Spiel zum Gehäuse 16 auf.

Die Abdichtung wird von radialen Dichtleisten 18 übernommen. Wie aus Fig. 2 deutlich zu ersehen ist, bilden die Abgasturbinen 9, 12 zusammen mit der Steuervorrichtung 5 einen kompakte bauliche Einheit von geringstem Bauvolumen, welche unmittelbar über die Abgasstränge 2, 3 an die Brennkraftmaschine 1 angeflanscht ist. Die Strömungswege von den Abgassträngen 2, 3 zu den Abgasturbinen 9, 12 sind so kurz als möglich gehalten, so daß Strömungsverluste und Enthalpieverluste durch Abkühlung auf ein Minimum reduziert werden.

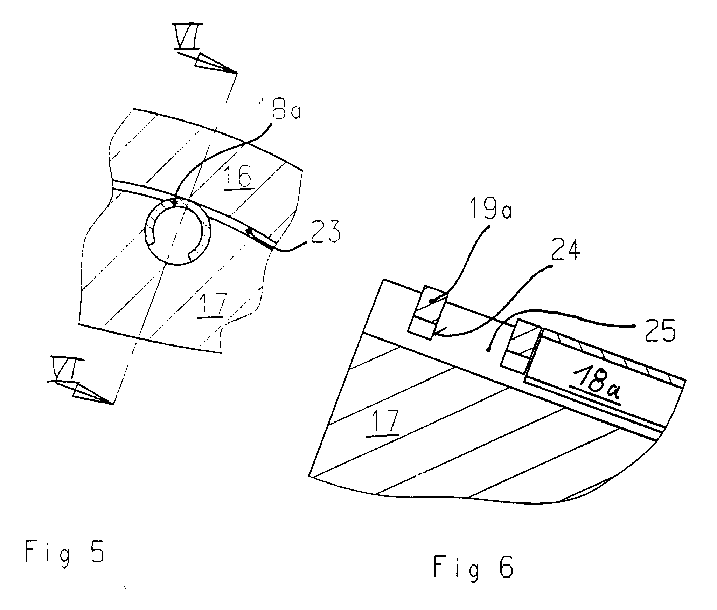

Fig. 3 zeigt einen Längsschnitt III-III durch das Küken 17. Das Küken 17 enthält die Pfade 18 und 19 die wieder doppelflutig ausgebildet sind. Die Dichtung auf dem Umfang übernehmen radiale Dichtleisten 18a, von denen hier nur eine im Schnitt III-III zu sehen ist. Die axiale Abdichtung erfolgt durch Kolbenringe 19a welche an den stirnseitigen Enden des Kükens 17 in Nuten liegend angeordnet sind. Eine detaillierte Darstellung der radialen Dichtleiste 18a und der Kolbenringe 19a geht aus den Figuren 5, 6 hervor. Die Drehung des Kükens 17 erfolgt von außen über die Welle 20, welche im Gehäuse 16 (Fig. 2 ) gelagert ist.

Fig. 4 zeigt eine Seitenansicht der Steuervorrichtung 5 mit Kanal 15. Ein Flansch 21 ist mit dem nicht dargestellten Austritt der ersten Abgasturbine 9 und der Flansch 22 ist mit dem Eingang 11 der zweiten Abgasturbine 12 verbunden ( Fig. 2 ) . Die Welle 20, welche drehfest mit dem Küken 17 des Drehschiebers verbunden ist kann von einem Luftzylinder oder dergleichen angetrieben werden.

Die Figuren 5 und 6 stellen Formen der radialen, bzw. der axialen Abdichtung dar. Nach Fig. 5 besteht zwischen dem Küken 17 und dem Gehäuse 16 ein radialer Spalt 23 um thermische Verformungen aufzufangen. Die Abdichtung bewerkstelligt eine radiale Dichtleiste 18a. Diese besteht aus einem in Längsrichtung geschlitzten Rohr, welches in eine axiale Bohrung im Küken 17 geschoben wird. Durch den Längsschlitz übt die Dichtleiste eine Federwirkung aus, durch die die Dichtleiste 18a gegen die Innenwand des Gehäuses gepreßt wird. Die Dichtleisten 18a sind gleichmäßig über den Umfang verteilt angeordnet.

Fig. 6 zeigt im Schnitt VI-VI die axiale Abdichtung mittels Kolbenringen 19a, welche in Nuten 24 im Küken 17 angeordnet sind. Wie in Fig. 3 dargestellt werden die Kolbenringe 19a an den stirnseitigen Enden des Kükens 17 angeordnet. Eine Dichtleiste 18a ist im Schnitt zu erkennen, sie ist in die Bohrung 25 eingeschoben.

### Funktionsweise:

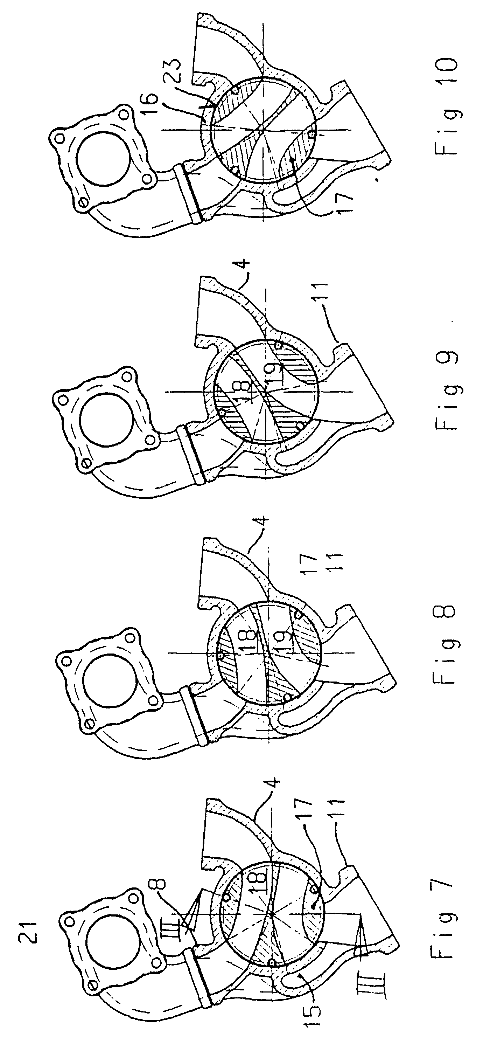

Zur Funktionsweise wird auf die Figuren 7 bis 10 verwiesen, welche alle einen Schnitt VII-VII nach Fig. 4 darstellen.

Nach Fig. 7 verbindet das Küken 17 den Abgasstutzen 4 über den Pfad 18 mit dem Eingang 8 der ersten Abgasturbine 9 ( Fig. 2 ). Der Ausgang der ersten Abgasturbine 9 ist mit Stutzen 21 verbunden der in den Kanal 15 mündet, wie in Fig. 4 dargestellt. Der Weg vom Abgasstutzen 4 zum Eingang 11 in die zweite Abgasturbine 12 ( Fig. 2 ) ist durch das Küken 17 versperrt. Von der ersten Abgasturbine 9 gelangt das Abgas über den Kanal 15 zum Eingang 11 der zweiten Abgasturbine 12. Beide Abgasturbinen 9, 12 sind somit in Reihe geschaltet.

Wird das Küken 17 in eine Position gedreht, wie sie in Fig. 8 dargestellt ist gelangt bereits ein Teil des Abgases vom Abgasstutzen 4 über den Pfad 19 zum Eingang 11 der zweiten Abgasturbine 12, während noch ein Teil des Abgases über Pfad 18 durch die erste Abgasturbine 9 strömt. Diese Zwischenstellung nach Fig. 8 hat den Vorteil, daß die erste Abgasturbine 9 nicht abrupt zurückfällt, solange Abgasturbine 12 im Hochfahren begriffen ist, andernfalls würde ein Leistungsabfall der Brennkraftmaschine 1 eintreten, verbunden mit einem unerwünschten Rußstoß.

In Fig. 9 ist die Umschaltung auf die zweite Abgasturbine 12 vollzogen. Der Abgasstutzen 4 ist über den Pfad 19 direkt mit dem Eingang 11 der zweiten Abgasturbine 12 verbunden, während der Weg des Abgases über Pfad 18 versperrt ist. Das gesamte Abgas geht über die zweite Abgasturbine 12.

Bei Betätigung der Motorbremse schwenkt das Küken 17 in die aus Fig. 10 zu ersehende Stellung und versperrt den Abgasstutzen. Da nach Fig. 5 zwischen Küken 17 und Gehäuse 16 ein radialer Spalt 23 vorgesehen ist kann der Staudruck im Abgasstutzen 4 während des Motorbremsbetriebes auf ein gewünschte Maß begrenzt werden.

## Patentansprüche

1. Steuervorrichtung einer aufgeladenen Brennkraftmachine, bei der zwei Abgasturbolader in Reihe geschaltet sind, und eine Steuervorrichtung einen Abgaskrümmer der Brennkraftmaschine über einen ersten Anschluß mit dem Eingang einer ersten Abgasturbine verbindet und der Ausgang der ersten Abgasturbine über einen Kanal stets mit dem Eingang der zweiten Abgasturbine verbunden ist und die Steuervorrichtung nach dem Umschalten den Abgaskrümmer über einen zweiten Anschluß direkt mit dem Eingang der zweiten Abgasturbine verbindet, wobei die erste Abgasturbine umfahren wird, dadurch gekennzeichnet, daß die Steuervorrichtung 5 als ein aus Gehäuse 16 und Küken 17 bestehender Drehschieber ausgebildet ist, dessen Gehäuse 16 einen Abgasstutzen 4 und einen ersten und zweiten Anschluß 6, 7 aufweist, sowie das Küken 17 zwei Pfade 18, 19 besitzt, wobei in Grundstellung der Abgasstutzen 4 über den ersten Pfad 18 mit dem ersten Anschluß 8 verbunden und nach Drehung des Kükens 17 der Abgasstutzen 4 über den zweiten Pfad 19 mit dem zweiten Anschluß 7 verbunden ist, und daß nach weiterer Drehung des Kükens 17 der Abgasstutzen 4 bis auf einen kleinen, vorbestimmten Querschnitt verschlossen wird.

2. Steuervorrichtung nach Anspruch 1, dadurch gekennzeichnet, daß das Küken 17 an seinen Enden mittels Welle 20 drehbar im Gehäuse 16 gelagert ist, daß zwischen Küken 17 und Gehäuse 16 radiales Spiel vorhanden ist und daß über den äußeren Umfang des Kükens gleichmäßig verteilte Dichtleisten 18a vorgesehen sind, welche gegen die Innenwand des Gehäuses 16 gepreßt werden, und daß zur axialen Abdichtung an den stirnseitigen Enden des Kükens 17 in Nuten liegende Kolbenringe 19a, vorgesehen sind.

## Claims

1. A control device of a supercharged internal-combustion engine, in which two exhaust-gas turbochargers are connected in series, and a control device connects an exhaust manifold of the internal-combustion engine to the inlet of a first exhaust-gas turbine via a first connection, and the outlet of the first exhaust-gas turbine is always connected to the inlet of the second exhaust-gas turbine via a passage, and, after switching over, the control device connects the exhaust manifold directly to the inlet of the second exhaust-gas turbine via a second connection, the first exhaust-gas turbine being bypassed, characterised in that the control device 5 is formed as a rotary valve comprising a housing 16 and a plug 17, the housing 16 having an exhaust connecting pipe 4 and a first and second connection 6, 7, and the plug 17 having two paths 18, 19, wherein, in the starting position, the exhaust connecting pipe 4 is connected to the first connection 6 via the first path 18 and, after rotation of the plug 17, the exhaust pipe 4 is connected to the second connection 7 via the second path 19, and in that, after further rotation of the plug 17, the exhaust connecting pipe 4 is closed except for a small, predetermined cross-sectional area.

2. A control device according to claim 1, characterised in that the plug 17 is rotatably mounted in the housing 16 at its ends by means of a shaft 20, in that radial clearance is provided between the plug 17 and the housing 16, in that sealing strips 18a are uniformly distributed over the outer circumference of the plug and are pressed against the inner wall of the housing 16, and in that piston rings 19a arranged in grooves are provided for axially sealing the front ends of the plug 17.

## Revendications

1. Dispositif de commande d'un moteur à combustion interne suralimenté comportant deux turbocompresseurs de gaz d'échappement branchés en série, et un dispositif de commande reliant un premier collecteur de gaz d'échappement du moteur à combustion interne, par un premier branchement à l'entrée d'une première turbine à gaz d'échappement et à la sortie de cette première turbine, par un canal, toujours à l'entrée de la seconde turbine à gaz d'échappement, tandis qu'après commutation, le dispositif de commande relie le collecteur de gaz d'échappement, par un second branchement, directement à l'entrée de la seconde turbine à gaz d'échappement, en contournant la première turbine,
caractérisé en ce que
• le dispositif de commande (5) comprend un boîtier (16) avec un boisseau (17) constituant un tiroir rotatif,
• le boîtier (16) comporte un ajutage de gaz d'échappement (4) ainsi qu'un premier et un second branchement (6, 7), et le boisseau (17) comporte deux chemins (18, 19),
• en position de base de l'ajutage de gaz d'échappement (4), le premier chemin (18) est relié au premier branchement (8) et, après rotation du boisseau (17), l'ajutage de gaz d'échappement (4) est relié par le second chemin (19) au second branchement (7) et,
• après une nouvelle rotation du boisseau (17), l'ajutage de gaz d'échappement (4) est fermé à l'exception d'une faible section prédéterminée.

2. Dispositif de commande selon la revendication 1,
caractérisé en ce que
• le boisseau (17) est monté par une extrémité, à l'aide d'un arbre (20) de façon rotative dans le boîtier (16) ;
• entre le boisseau (17) et le boîtier (16), il subsiste un jeu radial ;
• des joints d'étanchéité (18a) sont répartis régulièrement à la périphérie du boisseau, joints qui sont pressés contre la paroi intérieure du boîtier (16) ; et
• pour réaliser l'étanchéité axiale, les extrémités frontales du boisseau (17) comportent des segments de piston (19a) logés dans des rainures.
